# EUROPEAN PATENT APPLICATION

(11) **EP 2 468 792 A1**
(43) Date of publication of application: **27.06.2012**
(21) Application number: 10196904.6
(22) Date of filing: 23.12.2010
(51) Int. Cl.: C08G 59/18, C09J 163/00

(54) **Curable adhesive composition**

(71) Applicant: 3M Innovative Properties Company, Saint Paul, MN 55133-3427 (US)
(72) Inventor: The designation of the inventor has not yet been filed
(74) Representative: Wilhelm, Stefan

(57) **Abstract**

The present invention relates to a curable adhesive composition comprising a first part and a second part, the curable adhesive composition comprising:
in the first part at least one epoxy resin and in the second part at least one curing agent in the form of an epoxy-amine and/or epoxy-thiol adduct obtainable by reacting at least one primary amine, secondary amine and/or a thiol with at least one polyol compound comprising at least one terminal epoxy group.

## Description

The present invention relates to a two-part epoxy-based adhesive composition in curable and cured form. A further objective of this invention is an article bonded together with such an adhesive composition. This invention also relates to a method for bonding two substrates together with an adhesive composition according to this invention. Finally, the present invention is directed to the use of an epoxy-amine and/or epoxy-thiol adduct as a curing agent for a curable epoxy resin or a two-part curable epoxy adhesive.

Curable epoxy-based adhesive compositions are widely used as structural adhesives in one-part or two-part form. Such structural adhesives are typically formulated as thermosetting compositions that can be used to replace or augment conventional joining techniques such as screws, bolts, nails, staples, rivets, and metal fusion processes such as welding, brazing, and soldering. Structural adhesives are used in a variety of applications such as within the automotive and aerospace industries. To be useful as a structural adhesive, good mechanical strength and impact resistance are desired.

The physical properties of structural adhesive bonds depend on the interaction of the structural adhesive with the surface of the substrates to which the structural adhesive is applied. Under ideal conditions, the structural adhesive is applied to a clean surface; however, the surfaces of some substrates are contaminated with a hydrocarbon-containing material such as various oils and lubricants. Oil contamination is not uncommon on substrates that are part of a vehicle such as an automobile. The presence of the oil contamination can lead to undesirable bond failure at the adhesive/substrate interface.

Removing hydrocarbon-containing materials from the surfaces of substrates can be difficult. Mechanical processes such as dry wiping and/or using pressurized air tend to leave a thin layer of the hydrocarbon-containing material on the surfaces. Liquid cleaning compositions can be effective but these compositions typically need to be collected and recycled or discarded. Additionally, a drying step is typically needed after the cleaning step.

In automotive industry applications, the epoxy-based adhesives are almost always thermally cured by exposing them to a temperature of at least 60°C, sometimes as high as 170°C. Under these circumstances, either a one-part or a two-part adhesive can be used, although one-part types are often favoured, because of their usually higher tolerance against oil-contaminated substrate surfaces. However, one-part epoxy adhesives need a longer curing time at a given temperature compared to a two-part epoxy adhesive composition. This is in part due to the fact that many curing agents usually included in the one-part adhesive composition are deactivated at room temperature for the sake of storage stability. At higher temperatures, the blocked reactive groups of the curing agent are deblocked and at that point become available for a reaction with the epoxy resin.

Other mechanisms for increased shelf-life of one-part epoxy adhesive formulations use a lack of miscibility of the curing agent with the epoxy resin at room temperature, whereas miscibility is given at elevated temperatures. An example for this mechanism is the dicyandiamide curing agent, which is not miscible with the epoxy resin at room temperature but at temperatures above 150 °C.

Because of the resulting latency in curing speed of one-part epoxy adhesives, the work pieces which have to be bonded need to be provisionally fixed first by spot-welding in order to prevent a misalignment of the work pieces. This additional process step and the general slower curing speed of the one-part epoxy systems increase the production cycle time.

On the other hand, two-part epoxy based adhesives show a higher curing speed so that provisional pre-fixing of work pieces is not necessary. However, the application range of the two-part epoxy adhesives is limited in automotive applications because of their lower tolerance against oil-covered substrates.

It is therefore an object of the present invention to provide a curable two-part epoxy adhesive composition, which is more tolerant against oil-contermination on substrate surfaces. At the same time, the curable adhesive composition should also exhibit better crash-resistance properties compared to the two-part epoxy adhesives known so far.

This object is solved by a curable adhesive composition comprising a first part and a second part, the curable adhesive composition comprising:
in the first part at least one epoxy resin and in the second part at least one curing agent in the form of an epoxy-amine and/or epoxy-thiol adduct, obtainable by reacting at least one primary amine, secondary amine and/or a thiol with at least one polyol compound comprising at least one terminal epoxy group.

Results of peel-tests, overlap sheer strength tests and crash resistance tests have shown that the above mentioned curing agent drastically increases the oil-contamination tolerance of the two-part epoxy adhesive compositions formulated with such a curing agent. Also their crash behaviour is improved over other two-part epoxy systems. It is believed that these improvements might be induced by a better oil-solubility in an adhesive composition, caused by the curing agent as described above. The better crash resistance might be attributed to the polyol backbone of this curing agent. In other words, the curing agent used in the present invention combines toughening and curing capabilities in a single compound.

Because of the reactivity of the curing agent with epoxy groups the epoxy resin is separated in a first part from the curing agent prior to use of the curable adhesive composition. This first part can include, besides the epoxy resin, other components that do not react with the epoxy resin or that react with only a portion of the epoxy resin. Likewise, the second part can include other components that do not react with the curing agent or that react with only a portion of the curing agent. Optionally present reactive liquid modifiers may be added to the first part to avoid premature reaction with the curing agent. A toughening agent and other optional components such as an oil displacing agent may be included in the first part, in the second part, or in both the first part and the second part. When the first part and the second part are mixed together, the various components react to form the cured adhesive composition.

The epoxy resin that is included in the first part contains at least one epoxy functional group (i.e., oxirane group) per molecule. As used herein, the term oxirane group refers to the following divalent group according to Formula (I):

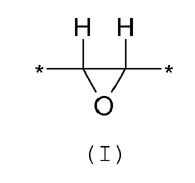

The asterisks denote a site of attachment of the oxirane group to another group. If the oxirane group is at the terminal position of the epoxy resin, the oxirane group is typically bonded to a hydrogen atom.

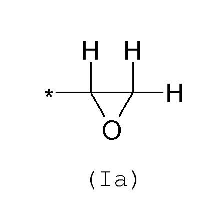

This terminal oxirane group is often part of a glycidyl group.

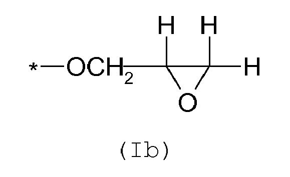

The epoxy resin often has at least one oxirane group per molecule and often has at least two oxirane groups per molecule. For example, the epoxy resin can have 1 to 10, 2 to 10, 1 to 6, 2 to 6, 1 to 4, or 2 to 4 oxirane groups per molecule. The oxirane groups are usually part of a glycidyl group.

Epoxy resins can be a single material or a mixture of materials selected to provide the desired viscosity characteristics before curing and to provide the desired mechanical properties after curing. If the epoxy resin is a mixture of materials, at least one of the epoxy resins in the mixture is typically selected to have at least two oxirane groups per molecule. For example, a first epoxy resin in the mixture can have two to four oxirane groups and a second epoxy resin in the mixture can have one to four oxirane groups. In some of these examples, the first epoxy resin is a first glycidyl ether with two to four glycidyl groups and the second epoxy resin is a second glycidyl ether with one to four glycidyl groups.

The portion of the epoxy resin molecule that is not an oxirane group (i.e., the epoxy resin molecule minus the oxirane groups) can be aromatic, aliphatic or a combination thereof and can be linear, branched, cyclic, or a combination thereof. The aromatic and aliphatic portions of the epoxy resin can include heteroatoms or other groups that are not reactive with the oxirane groups. That is, the epoxy resin can include halo groups, oxy groups such as in an ether linkage group, thio groups such as in a thio ether linkage group, carbonyl groups, carbonyloxy groups, carbonylimino groups, phosphono groups, sulfono groups, nitro groups, nitrile groups, and the like. The epoxy resin can also be a silicone-based material such as a polydiorganosiloxane-based material.

Although the epoxy resin can have any suitable molecular weight the weight average molecular preferably is at least 100 grams/mole and more preferably at least 150 grams/mole, at least 175 grams/mole, at least 200 grams/mole, at least 250 grams/mole, or at least 300 grams/mole. The weight average molecular weight can preferably be up to 50,000 gram/mole or even higher for polymeric epoxy resins. The weight average molecular weight more preferably is up to 40,000 grams/mole, up to 20,000 grams/mole, up to 10,000 grams/mole, up to 5,000 grams/mole, up to 3,000 grams/mole or up to 1,000 grams/mole. For example, the weight average molecular weight preferably is in the range of 100 to 50,000 grams/mole and more preferably in the range of 100 to 20,000 grams/mole, in the range of 10 to 10,000 grams/mole, in the range of 100 to 5,000 grams/mole, in the range of 200 to 5,000 grams/mole, in the range of 100 to 2,000 grams/mole, in the range of 200 to 2,000 gram/mole, in the range of 100 to 1,000 grams/mole or in the range of 200 to 1,000 grams/mole.

Suitable epoxy resins are preferably a liquid at room temperature (e.g., about 20°C to about 25°C). However, epoxy resins that can be dissolved in a suitable solvent can also be used. In more preferred embodiments, the epoxy resin is a glycidyl ether. Exemplary glycidyl ethers can be of Formula (II).

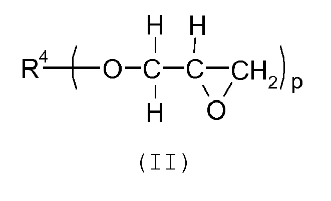

In Formula (II), group R⁴ is a p-valent group that is aromatic, aliphatic, or a combination thereof. Group R⁴ can be linear, branched, cyclic, or a combination thereof. Group R⁴ can optionally include halo groups, oxy groups, thio groups, carbonyl groups, carbonyloxy groups, carbonylimino groups, phosphono groups, sulfono groups, nitro groups, nitrile groups, and the like. Although the variable p can be any suitable integer greater than or equal to 1, p is often an integer in the range of 2 to 4.

In some exemplary epoxy resins of Formula (II), the variable p is equal to 2 (i.e., the epoxy resin is a diglycidyl ether) and R⁴ includes an alkylene (i.e., an alkylene is a divalent radical of an alkane and can be referred to as an alkane-diyl), heteroalkylene (i.e., a heteroalkylene is a divalent radical of a heteroalkane and can be referred to as a heteroalkane-diyl), arylene (i.e., a divalent radical of a arene compound), or mixture thereof. Suitable alkylene groups preferably have 1 to 20 carbon atoms and more preferably 1 to 12 carbon atoms, 1 to 8 carbon atoms or 1 to 4 carbon atoms. Suitable heteroalkylene groups preferably have 2 to 50 carbon atoms and more preferably 2 to 40 carbon atoms, 2 to 30 carbon atoms, 2 to 20 carbon atoms, 2 to 10 carbon atoms or 2 to 6 carbon atoms. The heteroatoms in the heteroalkylene can be selected from oxy, thio, or -NH- groups but are often oxy groups. Suitable arylene groups preferably have 6 to 18 carbon atoms or particularly 6 to 12 carbon atoms. For example, the arylene can be phenylene. Group R⁴ can further optionally include halo groups, oxy groups, thio groups, carbonyl groups, carbonyloxy groups, carbonylimino groups, phosphono groups, sulfono groups, nitro groups, nitrile groups, and the like. The variable p is usually an integer in the range of 2 to 4.

Some epoxy resins of Formula (II) are diglycidyl ethers where R⁴ includes (a) an arylene group or (b) an arylene group in combination with an alkylene, heteroalkylene, or both. Group R⁴ can further include optional groups such as halo groups, oxy groups, thio groups, carbonyl groups, carbonyloxy groups, carbonylimino groups, phosphono groups, sulfono groups, nitro groups, nitrile groups, and the like. These epoxy resins can be prepared, for example, by reacting an aromatic compound having at least two hydroxyl groups with an excess of epichlorohydrin. Examples of useful aromatic compounds having at least two hydroxyl groups include, but are not limited to, resorcinol, catechol, hydroquinone, p,p'-dihydroxydibenzyl, p,p'-dihydroxyphenylsulfone, p,p'-dihydroxybenzophenone, 2,2'-dihydroxyphenyl sulfone, and p,p'-dihydroxybenzophenone. Still other examples include the 2,2', 2,3', 2,4', 3,3', 3,4', and 4,4' isomers of dihydroxydiphenylmethane, dihydroxydiphenyldimethylmethane, dihydroxydiphenylethylmethylmethane, dihydroxydiphenylmethylpropylmethane, dihydroxydiphenylethylphenylmethane, dihydroxydiphenylpropylenphenylmethane, dihydroxydiphenylbutylphenylmethane, dihydroxydiphenyltolylethane, dihydroxydiphenyltolylmethylmethane, dihydroxydiphenyldicyclohexylmethane, and dihydroxydiphenylcyclohexane.

Some commercially available diglycidyl ether epoxy resins of Formula (II) are derived from bisphenol A (i.e., bisphenol A is 4,4'-dihydroxydiphenylmethane). Examples include, but are not limited to, those available under the trade designation EPON (e.g., EPON 828, EPON 872, and EPON 1001) from Hexion Specialty Chemicals, Inc. in Houston, TX, those available under the trade designation DER (e.g., DER 331, DER 332, and DER 336) from Dow Chemical Co. in Midland, MI, and those available under the trade designation EPICLON (e.g., EPICLON 850) from Dainippon Ink and Chemicals, Inc. in Chiba, Japan. Other commercially available diglycidyl ether epoxy resins are derived from bisphenol F (i.e., bisphenol F is 2,2'-dihydroxydiphenylmethane). Examples include, but are not limited to, those available under the trade designation DER (e.g., DER 334) from Dow Chemical Co. and those available under the trade designation EPICLON (e.g., EPICLON 830) from Dainippon Ink and Chemicals, Inc.

Other epoxy resins of Formula (II) are diglycidyl ethers of a poly(alkylene oxide) diol. These epoxy resins can be referred to as diglycidyl ethers of a poly(alkylene glycol) diol. The variable p is equal to 2 and R⁴ is a heteroalkylene having oxygen heteroatoms. The poly(alkylene glycol) can be copolymer or homopolymer. Examples include, but are not limited to, diglycidyl esters of poly(ethylene oxide) diol, diglycidyl esters of poly(propylene oxide) diol, and diglycidyl esters of poly(tetramethylene oxide) diol. Epoxy resins of this type are commercially available from Polysciences, Inc. in Warrington, PA such as those derived from a poly(ethylene oxide) diol or from a poly(propylene oxide) diol having a weight average molecular weight of about 400 grams/mole, about 600 grams/mole, or about 1000 gram/mole.

It is preferred that the epoxy resin comprises a polyether polyol having two to four glycidyl groups, preferably poly-THF glycidyl ether having two to four glycidyl groups.

Still other epoxy resins of Formula (II) are diglycidyl ethers of an alkane diol (R⁴ is an alkylene and the variable p is equal to 2). Examples include a diglycidyl ether of 1,4-dimethanol cylcohexyl, diglycidyl ether of 1,4-butanediol, and diglycidyl ethers of the cycloaliphatic diol formed from a hydrogenated bishpenol A such as those commercially available under the trade designation EPONEX 1510 from Hexion Specialty Chemicals, Inc. of Columbus, OH.

Yet other epoxy resins include silicone resins with at least two glycidyl groups and flame retardant epoxy resins with at least two glycidyl groups (e.g., a brominated bisphenol-type epoxy resin having with at least two glycidyl groups such as that commercially available from Dow Chemical Co. in Midland, MI under the trade designation DER 580).

The epoxy resin can be a mixture of materials. For example, the epoxy resins can be selected to be a mixture that provides the desired viscosity or flow characteristics prior to curing. The mixture can include at least one first epoxy resin that is referred to as a reactive diluent that has a lower viscosity and at least one second epoxy resin that has a higher viscosity. The reactive diluent tends to lower the viscosity of the epoxy resin mixture and often has either a branched backbone that is saturated or a cyclic backbone that is saturated or unsaturated. Examples include, but are not limited to, the diglycidyl ether of resorcinol, the diglycidyl ether of cyclohexane dimethanol, the diglycidyl ether of neopentyl glycol, and the triglycidyl ether of trimethylolpropane. Diglycidyl ethers of cyclohexane dimethanol are commercially available under the trade designation HELOXY MODIFIER 107 from Hexion Specialty Chemicals in Columbus, OH and under the trade designation EPODIL 757 from Air Products and Chemical Inc. in Allentonwn, PA. Other reactive diluents have only one functional group (i.e., oxirane group) such as various monoglycidyl ethers. Some exemplary monoglycidyl ethers include, but are not limited to, alkyl glycidyl ethers with an alkyl group having 1 to 20 carbon atoms, 1 to 12 carbon atoms, 1 to 8 carbon atoms, or 1 to 4 carbon atoms. Some exemplary monoglycidyl ethers are commercially available under the trade designation EPODIL from Air Products and Chemical, Inc. in Allentown, PA such as EPODIL 746 (2-ethylhexyl glycidyl ether), EPODIL 747 (aliphatic glycidyl ether), and EPODIL 748 (aliphatic glycidyl ether).

In preferred embodiments the epoxy resin includes one or more glycidyl ethers and does not include epoxy alkanes and epoxy esters. Epoxy alkanes and epoxy esters can be included in the curable adhesive compositions, however, as oil displacing agents.

The curable adhesive composition preferably includes at least 20 weight percent epoxy resin based on a combined weight of the first part and the second part (i.e., based on a total weight of the curable adhesive composition). For example, the curable adhesive composition can more preferably include at least 25 weight percent, at least 30 weight percent, at least 40 weight percent or at least 50 weight percent epoxy resin. The curable adhesive composition preferably includes up to 90 weight percent epoxy resin. For example, the curable composition can more preferably include up 80 weight percent, up to 75 weight percent, up to 70 weight percent, up to 65 weight percent or up to 60 weight percent epoxy resin. Some exemplary curable adhesive compositions preferably contain 20 to 90 weight percent and more preferably 20 to 80 weight percent, 20 to 70 weight percent, 30 to 90 weight percent, 30 to 80 weight percent, 30 to 70 weight percent, 30 to 60 weight percent, 40 to 90 weight percent, 40 to 80 weight percent, 40 to 70 weight percent, 50 to 90 weight percent, 50 to 80 weight percent or 50 to 70 weight percent epoxy resin.

The curing agent is obtainable by reacting at least one primary amine, secondary amine and/or thiol with at least one epoxidized polyol compound. The reaction product may be characterized by the general formula (III): 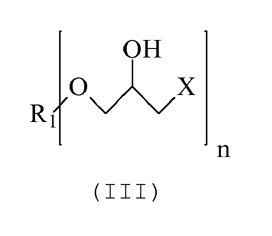 with R₁ being an n-valent polyol residue as described above.

n is an integer and may range from 1 to 6; preferably, n is at least = 2. X represents a primary or secondary amine group of the type 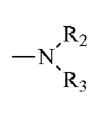 with R₂ = H, 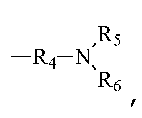 R₃ = H, Alkyl, Aryl, R₄ = Alkylene or Heteroalkylene, R₅, R₆ = H, Alkyl, Aryl. X may also represent a thiol group, i.e. X = -S-R₇ with R₇ = H, R₈-(S-H)ᵢ with R₈ = Alkylene or Heteroalkylene and i being an integerpreferably ranging from 1 to 6. If n is at least = 2 different primary or secondary amine or thiol groups may be present in each molecule of the Formula (III). It is as well in the scope of this invention that substances with different X-groups according to formula (III) are present in the adhesive composition.

A preferred compound according to formula (III) is of the structure of the following formula (IIIa) 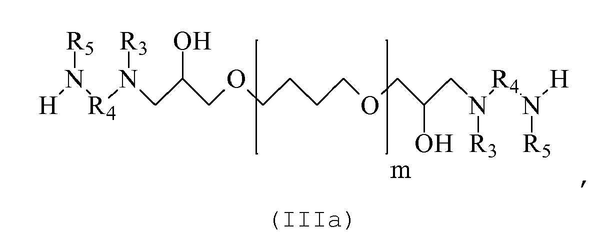 with R₂ as defined above and m preferably ranging from 5 to 15.

The curing agent may be synthesized from a great variety of polyol compounds. The polyol residue R₁ may be selected from a group comprising polyester polyols, polyether polyols, poly(meth)acrylate homo- and copolymers, copolymers of butadienen with styrene, acryl nitrile, polyurethane polyols, polyurea polyols, polycarbonate polyols, polyols from renewable sources or mixtures thereof.

R₁ may also be a reaction product of epoxy functionalized polyols with amines, for example monoamines, secondary diamines, primary and secondary amines, primary diamines or with thiols.

According to a further embodiment of the present invention, the primary and secondary amine to be used in the curing agent are selected from a group comprising aliphatic, cycloaliphatic or aromatic amines or combinations thereof, polyetheramines, polyamidoamines, polyamides, Mannich bases or mixtures thereof.

If a thiol is used as a reaction partner for the epoxydized polyol compound to form the curing agent according to this invention, the thiol may be selected from a group comprising aliphatic, cycloaliphatic, aromatic thiols or combinations thereof.

The epoxy amine and/or epoxy-thiol adducts used as a curing agent preferably have a Mw of 100 to 100.000 g/mol and more preferably from 200 to 10.000 g/mol. To further increase the oil-contamination tolerance of the curable adhesive compositions according to the current invention, the polyol compound preferably is or at least contains poly-THF having a continuous sequence of at least 5 tetramethylene oxide units, more preferably from 5 to 15. The amount of poly-THF may vary over a broad range, it is preferred, however, that the mass contents of poly-THF in the epoxy-amine and/or epoxy-thiol adduct is at least 20 wt.-%, preferably at least 30 wt.-%.

According to a preferred embodiment of the current invention the polyol compound is liquid at 25°C and preferably has a Mw of 1200 g/mol or less, especially of 1000 g/mol or less and more preferably from 500 to 1000 g/mol.

The curable adhesive composition may further include a toughening agent, preferably present in the first part of the curable adhesive composition. Toughening agents are polymers other than the curable epoxy resins or reactive liquid modifiers that are capable of enhancing the toughness of the cured adhesive composition. The toughness can be characterized by measuring the T-peel strength of the cured adhesive compositions. T-peel strength preferably is greater than 30 lb_{f}/in-width (i.e., 30 foot-pounds per inch width), which is equal to 131 Newton per 25 mm (i.e., 131 N/25 mm). The T-peel strength can more preferably be greater than 40 lb_{f}/in-width (175 N/25 mm), greater than 50 lb_{f}/in-width (219 N/25 mm) or greater than 60 lb_{f}/in-width (263 N/25 mm). The toughening agents can be added to the first part of the curable adhesive composition with the epoxy resin and reactive liquid modifier, to the second part of the curable adhesive composition with the curing agent, or to both the first and second part of the curable adhesive composition. Typical toughening agents include core-shell polymers, butadiene-nitrile rubbers, acrylic polymers and copolymers and the like.

Core-shell polymers are preferred toughening agents. A shell polymeric material is typically grafted to a core polymeric material. The core is usually an elastomeric material with a glass transition temperature less than 0 °C. The shell is usually a polymeric material having a glass transition temperature greater than 25°C. The glass transition temperature can be determined using differential scanning calorimetry (DSC) or a similar method.

The core of the core-shell polymeric toughening agents is often prepared from a butadiene polymer or copolymer, a styrene polymer or copolymer, an acrylonitrile polymer or copolymer, an acrylate polymer or copolymer, or combinations thereof. These polymers or copolymers can be cross-linked or not cross-linked. Some exemplary cores are polymethylmethacrylates that are either non-crosslinked or crosslinked. Other exemplary cores are butadiene-styrene copolymers that are either non-crosslinked or crosslinked.

The shell of the core-shell polymeric toughening agents are often formed from a styrene polymer or copolymer, a methacrylate polymer or copolymer, an acrylonitrile polymer or copolymer, or combinations thereof. The shell can be further functionalized with epoxy groups, acidic groups, or acetoacetoxy groups. Functionalization of the shell may be achieved, for example, by copolymerization with glycidylmethacrylate or acrylic acid or by reaction of a hydroxy group with an alkyl acetoacetoxy such as tert-butyl acetoacetoxy. The addition of these functional groups can result in the shell being crosslinked into the polymeric matrix.

Suitable core-shell polymers preferably have an average particle size equal to at least 20 nanometers and more preferably of at least 50 nanometers, of at least 100 nanometers, of at least 150 nanometers or of at least 200 nanometers. The average particle size may be up to 400 nanometers and preferably up to 500 nanometers, up to 750 nanometers, or up to 1000 nanometers. The average particle size may be, for example, in the range of 10 to 1000 nanometers and preferably in the range of 50 to 1000 nanometers, in the range of 100 to 750 nanometers or in the range of 150 to 500 nanometers.

Exemplary core-shell polymers and their preparation are described in U.S. Patent No. 4,778,851 (Henton et al.). Commercially available core-shell polymers can be obtained, for example, under the trade designation PARALOID (e.g., PARALOID EXL 2600 and PARALOID EXL 2691) from Rohm & Haas Company in Philadelphia, PA and under the trade designation KANE ACE (e.g., KANE ACE MX120 and KANE ACE MX153) from Kaneka in Belgium.

Still other toughening agents can be prepared by reacting amino-terminated materials or carboxy-terminated materials with an epoxy resin to prepare an adduct that phase separates from the other components in the cured adhesive composition. Suitable amino-terminated materials that can be used to prepare such toughening agents include, but are not limited to, those commercially available under the trade designation DYNAMAR POLYETHERDIAMINE HC 1101 from 3M Corporation in Saint Paul, MN. Suitable carboxy-terminated materials include carboxy-terminated butadiene acrylonitrile copolymers such as those commercially available from Emerald Chemical in Alfred, ME.

The curable adhesive compositions may include at least 5 weight percent of the toughening agent based on a total weight of the curable adhesive composition. For example, the curable adhesive compositions can preferably include at least 10 weight percent and more preferably at least 15 weight percent, at least 20 weight percent or at least 25 weight percent of the toughening agent. The amount of the toughening agent often may be up to 55 weight percent based on a total weight of the curable adhesive composition. For example, the curable adhesive composition can preferably include up to 50 weight percent and more preferably up to 45 weight percent, up to 40 weight percent, up to 35 weight percent, up to 30 weight percent or up to 25 weight percent of the toughening agent. In some embodiments, the curable adhesive composition contains 5 to 55 weight percent, 5 to 50 weight percent, 5 to 40 weight percent, 5 to 30 weight percent, 5 to 20 weight percent, or 5 to 15 weight percent of the toughening agent.

In addition to the epoxy resin and the curing agent, the curable adhesive composition may comprise in its first and/or second part at least one substance selected from a group comprising reactive liquid modifiers, oil-displacing agents, corrosion inhibitors, anti-oxidants, fillers, plasticizers, further curing agents and accelerators.

If added to the first part of the adhesive, the further curing agent needs to be blocked or be present in core shell particles in order to avoid an unwanted curing reaction before the two parts of the adhesive are mixed. If desired, the further curing agent may be present in the second part of the adhesive composition.

The further curing agents, if present, have at least two primary amino groups, at least two secondary amino groups or combinations thereof. That is, the curing agent has at least two groups of formula -NR²¹H where R²¹ is selected from hydrogen, alkyl, aryl, or alkylaryl. Suitable alkyl groups may have 1 to 12 carbon atoms or preferably 1 to 8 carbon atoms, 1 to 6 carbon atoms or 1 to 4 carbon atoms. The alkyl group can be cyclic, branched, linear, or a combination thereof. Suitable aryl groups usually have 6 to 12 carbon atom such as a phenyl group. Suitable alkylaryl groups can be either an alkyl substituted with an aryl or an aryl substituted with an alkyl. The same aryl and alkyl groups discussed above can be used in the alkylaryl groups.

When the first part and the second part of the curable adhesive composition are mixed together the primary and/or secondary amino groups of the curing agent react with the oxirane groups of the epoxy resin. This reaction opens the oxirane groups and covalently bonds the curing agent to the epoxy resin. The reaction results in the formation of divalent groups of formula -C(OH)H-CH₂-NR²¹-.

The curing agent minus the at least two amino groups (i.e., the portion of the curing agent that is not an amino group) can be any suitable aromatic group, aliphatic group, or combination thereof. Some amine curing agents are of Formula (IV) with the additional limitation that there are at least two primary amino groups (i.e., - NH₂ groups), at least two secondary amino groups (i.e., - NHR²¹ groups where the R²¹ residues are independently from each other hydrogen, alkyl, aryl, or alkylaryl), or at least one primary amino group and at least one secondary amino group.

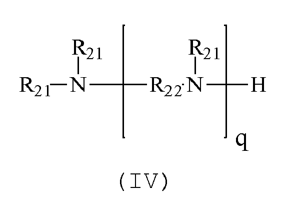

Each R²² is independently an alkylene, heteroalkylene, or combination thereof. Suitable alkylene groups preferably have from 1 to 18 carbon atoms and more preferably from 1 to 12 carbon atoms, 1 to 8 carbon atoms, 1 to 6 carbon atoms or 1 to 4 carbon atoms. Suitable heteroalkylene groups have at least one oxy, thio, or -NH- group positioned between two alkylene groups. Suitable heteroalkylene groups preferably have 2 to 50 carbon atoms and more preferably from 2 to 40 carbon atoms, 2 to 30 carbon atoms, 2 to 20 carbon atoms or 2 to 10 carbon atoms with preferably up to 20 heteroatomsand more preferably up to 16 heteroatoms, up to 12 heteroatoms or up to 10 heteroatoms. The heteroatoms are often oxy groups. The variable q is an integer equal to at least one and can preferably be up to 10 or higher and more preferably up to 5, up to 4 or up to 3. Each R²¹ group is independently hydrogen, alkyl, aryl, or alkylaryl. Suitable alkyl groups for R²¹ preferably have 1 to 12 carbon atoms and more preferably 1 to 8 carbon atoms, 1 to 6 carbon atoms or 1 to 4 carbon atoms. The alkyl group can be cyclic, branched, linear, or a combination thereof. Suitable aryl groups for R²¹ preferably have 6 to 12 carbon atoms such as a phenyl group. Suitable alkylaryl groups for R²¹ can be either an alkyl substituted with an aryl or an aryl substituted with an alkyl. The same aryl and alkyl groups discussed above can be used in the alkylaryl groups.

Some amine curing agents preferably have an R²² group selected from an alkylene group. Examples include, but are not limited to, ethylene diamine, diethylene diamine, diethylene triamine, triethylene tetramine, propylene diamine, tetraethylene pentamine, hexaethylene heptamine, hexamethylene diamine, 2-methyl-1,5-pentamethylene diamine, 1-amino-3-aminomethyl-3,3,5-trimethylcyclohexane (also called isophorone diamine), aminoethylpiperazine and the like. Other amine curing agents can have an R²² group selected from a heteroalkylene group such as a heteroalkylene having oxygen heteroatoms. For example, the curing agent can be a compound such as 4,7,10-trioxatridecane-1,13-diamine (TTD) available from TCI America in Portland, OR, or a poly(alkylene oxide) diamine (also called polyether diamines) such as a poly(ethylene oxide) diamine, poly(propylene oxide) diamine, or a compolymer thereof. Commercially available polyether diamines are commercially available under the trade designation JEFFAMINE form Huntsman Corporation in The Woodlands, TX.

Still other amine curing agents can be formed by reacting a polyamine (i.e., a polyamine refers to an amine with at least two amino groups selected from primary amino groups and secondary amino groups) with another reactant to form an amine-containing adduct having at least two amino groups. For example, a polyamine can be reacted with an epoxy resin to form an adduct having at least two amino groups. If a polymeric diamine is reacted with a dicarboxylic acid in a molar ratio of diamine to dicarboxylic acid that is greater than or equal to 2:1 a polyamidoamine having two amino groups can be formed. In another example, if a polymeric diamine is reacted with an epoxy resin having two glycidyl groups in a molar ratio of diamine to epoxy resin greater than or equal to 2:1, an amine-containing adduct having two amino groups can be formed. A molar excess of the polymeric diamine may preferably be used so that the curing agent includes both the amine-containing adduct plus free (non-reacted) polymeric diamine. For example, the molar ratio of diamine to epoxy resin with two glycidyl groups can preferably be greater than 2.5:1 and more preferably greater than 3:1, greater than 3.5:1 or greater than 4:1. Even when epoxy resin is used to form the amine-containing adduct in the second part of the curable adhesive composition, additional epoxy resin is present in the first part of the curable adhesive composition.

The curing agent can preferably be a mixture of materials. For example, the curing agent can include a first curing agent that is a polymeric material added to enhance flexibility of the cured adhesive composition plus a second curing agent that is added to alter the glass transition temperature of the cured adhesive composition. The curable adhesive compositions preferably contain at least 3 weight percent curing agent based on a total weight of the curable adhesive composition. For example, the total curable adhesive composition preferably contains at least 3 weight percent and more preferably at least 5 weight percent or at least 10 weight percent of the curing agent. The adhesive composition preferably includes up to 30 weight percent and more preferably up to 25 weight percent, up to 20 weight percent or up to 15 weight percent of the curing agent. For example, the curable adhesive composition can preferably contain 3 to 30 weight percent and more preferably 3 to 25 weight percent, 3 to 20 weight percent, 3 to 15 weight percent, 3 to 10 weight percent, 5 to 30 weight percent, 5 to 25 weight percent, 5 to 20 weight percent or 5 to 15 weight percent of the curing agent.

The further curing agents may comprise other curing agents typically considered to be secondary curatives such as imidazolines or salts thereof or phenols substituted with tertiary amino groups. Suitable phenols substituted with tertiary amino groups can be of Formula (IVa).

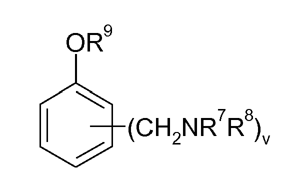

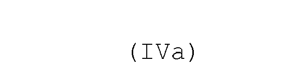

In Formula (IVa), each group R⁷ and R⁸ independently is an alkyl. The variable v is an integer equal to 2 or 3. Group R⁹ is hydrogen or alkyl. Suitable alkyl groups for R⁷, R⁸, and R⁹ preferably have 1 to 12 carbon atoms and more preferably 1 to 8 carbon atoms, 1 to 6 carbon atoms or 1 to 4 carbon atoms. One exemplary secondary curative of Formula (IVa) is tris-2,4,6-(dimethylaminomethyl)phenol that is commercially available under the trade designation ANCAMINE K54 from Air Products Chemicals, Inc. of Allentown, PA.

The optional secondary curative can be present in the first part of the curable adhesive composition with the epoxy resin and the reactive liquid modifier or in the second part of the curable adhesive composition with the curing agent. The amount of the secondary curative preferably is up to 6 weight percent and more preferably up to 5 weight percent or up to 4 weight percent based on a total weight of the curable adhesive composition. If included in the first part, the secondary curative can be present in an amount in the range of 0 to 15 weight percent and more preferably in the range of 0.5 to 10 weight percent or in the range of 1 to 5 weight percent based on a total weight of the first part. If included in the second part (curing agent side), the secondary curative may preferably be present in an amount in the range of 0 to 5 weight percent and more preferably in the range of 0.5 to 5 weight percent or in the range of 1 to 5 percent based on a total weight of the second part.

A reactive liquid modifier may be added to the adhesive composition to enhance the flexibility of that composition in the cured state, to further enhance the impact resistance and/or to enhance the effect of a toughening agent or combinations thereof. Reactive liquid modifiers of the present invention may be acetoacetoxy functionalized compounds of the formula (V). 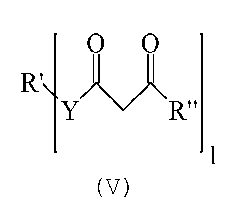 wherein
l is an integer from 1 to 10, preferably from 1 to 3;
Y represents O, S or NH; preferably Y is O;
R' represents a residue selected from the group of residues consisting of polyhydroxy alkyl, polyhydroxy aryl or a polyhydroxy alkylaryl, polyoxy alkyl, polyoxy aryl and polyoxy alkylaryl; polyoxy polyhydroxy alkyl, -aryl, -alkylaryl, or polyhydroxy polyester alkyl, -aryl or -alkylaryl, wherein R' is linked to Y via a carbon atom, and wherein, if l is other than 1, R' is linked to Y via the number of carbon atoms corresponding to l. Preferably R' represents a polyether polyhydroxy alkyl, -aryl or - alkylaryl residue, or a polyester polyhydroxy alkyl, -aryl or - alkylaryl residue.

The residue R' may, for example, contain from 2 to 20 or from 2 to 10 carbon atoms. The residue R' may, for example, also contain from 2 to 20 or from 2 to 10 oxygen atoms. The residue R' may be linear or branched.

Examples of polyesterpolyol residues include polyester-polyols obtainable from condensation reactions of a polybasic carboxylic acid or anhydrides and a stoichiometric excess of a polyhydric alcohol, or obtainable from condensation reactions from a mixture of polybasic acids, monobasic acids and polyhydric alcohols. Examples of polybasic carboxylic acids, monobasic carboxylic acids or anhydrides include those having from 2 to 18 carbon atoms, preferably those having from 2 to 10 carbon atoms. Examples of polybasic carboxylic acids or anhydrides include adipic acid, glutaric acid, succinic acid, malonic acid, pimleic acid, sebacic acid, suberic acid, azelaic acid, cyclohexane-dicarboxylic acid, phthalic acid, isophthalic acid, terephthalic acid, hydrophthalic acid (e.g. tetrahydro or hexadehydrophthalic acid) and the corresponding anhydrides and including combinations thereof.

Examples of monobasic carboxylic acids include formic acid, acetic acid, propionic acid, butyric acid, valeric acid, caproic acid, caprylic acid, capric acid, lauric acid, myristic acid, palmitic acid, stearic acid and the like, as well as combinations thereof.

Polyhydric alcohols include those having from 2 to 18, preferably 2 to 10 carbon atoms.

Examples of polyhydric alcohols include ethylene glycol, propylene glycol, butylene glycol, hexylene glycol, pentaerythriol, glycerol and the like including polymers thereof.

Examples of polyetherpolyol residues include those derived from polyalkylene oxides. Typically, the polyalkylene oxides contain alkylene groups from about 2 to about 8 carbon atoms, and preferably from about 2 to about 4 carbon atoms. The alkylene groups may be linear or branched but are preferably linear. Examples of polyetherpolyol residues include polyethylene oxide polyol residues, polypropylene oxide polyol residues, polytetramethylene oxide polyol residues, and the like.

R" represents a C₁-C₁₂ linear or branched or cyclic alkyl such as methyl, ethyl, propyl, butyl, sec-butyl, tert-butyl etc.

The acetoacetoxy-functionalized oligomers can be prepared by acetacetylation of polyhydroxy compounds with alkyl acetoacetates, diketene or other acetoacetylating compounds as, for example, described in EP 0 847 420 B1.

Other polyhydroxy compounds may be a copolymer of acrylates and/or methacrylates and one or more unsaturated monomer containing a hydroxyl group. Further examples of polyhydroxy polymers include hydroxyl-terminated copolymers of butadiene and acrylonitrile, hydroxy-terminated organopolysiloxanes, polytetrahydrofuran polyols, polycarbonate polyols or caprolactone based polyols. Acetoacetoxy-functionalized polymers are commercially available, for example, as K-FLEX XM-B301 from Worlee-Chemie GmbH, Lauenburg, Germany.

The reactive liquid modifier of Formula (V) is typically not reactive with the epoxy resin but is reactive with the curing agent. The reactive liquid modifier is usually added to the first part of the curable adhesive composition to minimize premature reaction with the curing agent in the second part. The reactive liquid modifier is typically not reactive at room temperature with the secondary curatives and can be mixed with such materials in the first part of the curable adhesive composition.

The reactive liquid modifier can react with the curing agent having primary amino groups, secondary amino groups, or a mixture of primary and secondary amino groups. The primary amino or secondary amino groups can react with the terminal carbonyl group of the reactive liquid modifier. For purposes of simplicity, the reaction of a single primary amino group of the curing agent (H₂N-R"'-NH₂) with one terminal carbonyl group of the reactive liquid modifier is shown in the following reaction. 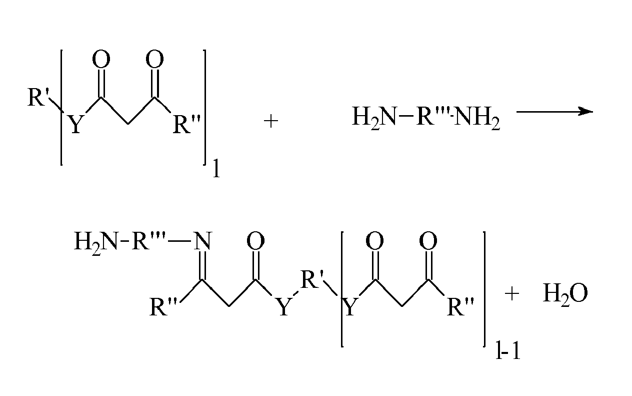 This reaction between the curing agent and the reactive liquid modifier typically occurs at a faster rate than the reaction between the curing agent and the epoxy resin. Any curing agent not consumed by the reaction with the reactive liquid modifier can then be reacted with the epoxy resin. R', R" and Y are the residues defined in formula V above; R"' may correspond, for example, to residue R²² defined in formula IV above.

The curable adhesive composition preferably contains at least 3 weight percent of the reactive liquid modifier based on a total weight of the curable adhesive composition. The reactive liquid modifier is more preferably present in an amount equal to at least 4 weight percent, at least 5 weight percent, at least 7 weight percent or at least 10 weight percent based on the total weight of the curable adhesive composition. The curable adhesive composition preferably contains up to 20 weight percent of the reactive liquid modifier. This amount may be more preferably up to 18 weight percent, up to 15 weight percent or up to 12 weight percent. For example, the reactive liquid modifier may be present in the range of 3 to 20 weight percent and more preferably from 4 to 20 weight percent, 4 to 15 weight percent, 4 to 12 weight percent, 4 to 10 weight percent or 5 to 10 weight percent based on the total weight of the curable adhesive composition.

If the curing reaction occurs at room temperature, the amount of the curing agent in the curable adhesive composition is preferably selected so that the ratio of amine hydrogen equivalent weight to epoxy equivalent weight is at least 0.5:1 and more preferably at least 0.8:1 or at least 1:1. The ratio can up be to 2:1 or up to 1.5:1. For example, the ratio can be in the range of 0.5:1 to 2:1 and more preferably in the range of 0.5:1 to 1.5:1, in the range of 0.8:1 to 2:1, in the range of 0.8:1 to 1.5:1, in the range of 0.8:1 to 1.2:1, in the range of 0.9:1 to 1.1:1 or about 1:1. The ratio is often selected so that there is sufficient amine curing agent present to react with both the epoxy resin and the reactive liquid modifier.

If the curing temperature occurs at elevated temperatures (e.g., temperatures above 100°C or above 120°C or above 150°C), however, a lower amount of the amine curing agent is often used. The amount of the curing agent in the curable adhesive composition is often present in a sufficient molar amount to react with the reactive liquid modifier and with a portion of the epoxy resin. For example, the ratio of amine hydrogen equivalent weight to epoxy equivalent weight is preferably less than 1:1 and more preferably in the range of 0.2:1 to 0.8:1, in the range of 0.2:1 to 0.6:1 or in the range of 0.3:1 to 0.5:1. Any epoxy resin that is not reacted with the curing agent tends to undergo homopolymerization at elevated temperatures.

The cured adhesive composition is less likely to crack or break upon impact when the reactive liquid modifier is included in the curable adhesive composition. That is, the reactive liquid modifier typically improves the impact peel strength of the cured adhesive composition. The impact peel strength is preferably greater than 13 Newtons per millimeter (N/mm) and more preferably greater than 15 N/mm, greater than 20 N/mm, greater than 25 N/mm or greater than 30 N/mm.

In addition to the epoxy resin, curing agent, reactive liquid modifier and toughening agent the curable adhesive compositions can optionally further include an oil displacing agent that is soluble in the curable adhesive composition. The oil displacing agent can be added to the first part of the curable adhesive composition containing the epoxy resin and the reactive liquid modifier, to the second part of the curable adhesive composition containing the curing agent or to both the first part and the second part. The oil displacing agent can be added to promote adhesion between the cured adhesive composition and the surface of a substrate that is contaminated with a hydrocarbon-containing material.

As used herein, the term "hydrocarbon-containing material" refers to a variety of substances that can contaminate the surface of the substrate during processing, handling, storage, or combinations thereof. Examples of hydrocarbon-containing materials include but are not limited to mineral oils, fats, dry lubricants, deep drawing oils, corrosion protection agents, lubricating agents, waxes and the like. The surface of the substrate may contain other contaminants in addition to the hydrocarbon-containing material. While not wishing to be bound by such theory, the oil displacing agent may facilitate the transfer of the hydrocarbon-containing material away from the surface of the substrate and into the bulk of the curable adhesive composition. This transfer away from the surface of the substrate may result in improved adhesive bond strength. Sufficient adhesive bond strength can often be obtained without the need for a heat curing step. The optionally present oil displacing agents preferably are liquids at room temperature. These agents are typically capable of disrupting or displacing hydrocarbon-containing material at the surface of the substrate while remaining miscible both with the curable adhesive composition during application and with the resulting cured adhesive composition. Suitable oil displacing agents preferably have a surface tension that is lower than that of the hydrocarbon-containing material and a solubility parameter similar to that of the hydrocarbon-containing material.

The oil displacing agents preferably have a surface tension of up to 35 dynes per centimeter (dynes/cm). The surface tension can more preferably be up to 32 dynes/cm, up to 30 dynes/cm or up to 25 dynes/cm. The surface tension preferably is at least 15 dynes/cm and more preferably at least 18 dynes/cm or at least 20 dynes/cm. The surface tension can preferably be in the range of 15 to 35 dynes/cm and more preferably in the range of 15 to 32 dynes/cm, in the range of 15 to 30 dynes/cm, in the range of 20 to 35 dynes/cm, in the range of 20 to 30 dynes/cm, in the range of 25 to 35 dynes/cm, or in the range of 25 to 30 dynes/cm. The surface tension can be measured, for example, using the so-called pendant drop test (also referred to as the pendant drop shape analysis method) as specified in the article by F.K. Hansen et al. in J. Coll. and Inter. Sci., 141, 1-12 (1991).

If the hydrocarbon-containing material on the surface of the substrate is known the oil displacing agent can be selected to have a surface tension that is less than the surface tension of the hydrocarbon-containing material. More specifically, the oil displacing agent is preferably selected to have a surface tension that is at least 2.5 dynes/cm less than that of the hydrocarbon-containing material. The surface tension of the oil displacing agent more preferably is at least 4.0 dynes/cm less than, at least 8.0 dynes/cm less than or at least 12.0 dynes/cm less than that of the hydrocarbon-containing material.

In many embodiments, the solubility parameter of the oil displacing agent is in the range of 6 to 12 cal^{0.5}/cm^{1.5}. For example, the solubility parameter preferably is in the range of 7 to 12 cal^{0.5}/cm^{1.5} and more preferably in the range of 8 to 12 cal^{0.5}/cm^{1.5}, in the range of 7 to 10.5 cal^{0.5}/cm^{1.5}, in the range of 7 to 9 cal^{0.5}/cm^{1.5} or in the range of 7.5 to 9 cal^{0.5}/cm^{1.5}. The solubility parameter can be calculated with software commercially available under the trade designation MOLECULAR MODELING PRO from ChemSW, Inc. of Fairfield, CA using the method described by D.W. van Krevelen in the book Properties of Polymers: Their Correlation with Chemical Structure: Their Numerical Estimation and Prediction form Additive Group Contributions, 4th edition, pp. 200-225, 1990, published by Elsevier in Amsterdam, The Netherlands.

Empirical methods can be used to identify suitable oil displacing agents for a particular application. For example, approximately 20 to 100 microliters of an oil displacing agent to be evaluated can be gently deposited on the surface of a substrate covered with a film of the hydrocarbon-containing material. Suitable oil displacing agents will typically spread out and cause the film of hydrocarbon-containing material to rupture. While not wishing to be bound by such theory, it is assumed that suitable oil displacing agents are believed to at least partially dissolve the hydrocarbon-containing material and/or to at least partially diffuse into the hydrocarbon-containing material. The droplet of suitable oil displacing agents tends to push the hydrocarbon-containing material outward from the impact area.

Although empirical methods can facilitate the relatively quick identification of potentially suitable oil displacing agents not all compounds that pass such a test can be used successfully as oil displacing agents based on other considerations. For example, some compounds can cause film rupture but are too volatile in the curable adhesive compositions or not sufficiently miscible with the curable adhesive composition to be effective as oil displacing agents.

Many different classes of compounds are suitable for the oil displacing agent. Suitable types of compounds include but are not limited to glycidyl esters, cyclic terpenes, cyclic terpene oxides, mono-esters, di-esters, tri-esters, trialkyl phosphates, epoxy alkanes, alkyl methacrylates, vinyl alkyl esters, alkanes, and alcohols. The oil displacing agent is typically not a glycidyl ether.

Some oil displacing agents are glycidyl esters of Formula (VI)

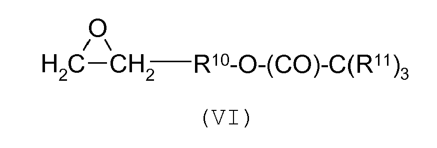

In Formula (VI), group R¹⁰ is an alkylene having 1 to 18 carbon atoms and preferably 1 to 12 carbon atoms, 1 to 10 carbon atoms, 1 to 8 carbon atoms, 1 to 6 carbon atoms or 1 to 4 carbon atoms. In some exemplary compounds of Formula (VI), group R¹⁰ is methylene. Each group R¹¹ is independently a linear or branched alkyl have 1 to 12 carbon atoms and preferably 1 to 10 carbon atoms, 1 to 8 carbon atoms, 1 to 6 carbon atoms or 1 to 4 carbon atoms. One exemplary compound of Formula (VI) is commercially available under the trade designation CARDURA N10 from Hexion Specialty Chemicals in Columbus, OH. This oil displacing agent is a glycidyl ester of a highly branched tertiary carboxylic acid (neodecanoic acid) having 10 carbon atoms.

Some oil displacing agents are esters. Suitable mono-esters can be of Formula (VIa)

**R¹³-O-(OC)-R¹²** (VIa)

In Formula (VIa) the group R¹³ is a linear or branched alkyl having 1 to 20 carbon atoms and preferably 1 to 18 carbon atoms, 1 to 12 carbon atoms or 1 to 8 carbon atoms. Group R¹² is an alkyl, an alkene-yl (i.e., an alkene-yl is a monovalent radical of an alkene), an aryl, or an arylalkyl. Suitable alkyl and alkene-yl groups for R¹² have 6 to 20 carbon atoms and preferably 8 to 20 carbon atoms, 8 to 18 carbon atoms, or 8 to 12 carbon atoms. The alkyl and alkene-yl can be unsubstituted or substituted with a hydroxyl group, an amino group, an aryl group, or an alkylaryl group. Suitable amino group substituents are of formula -N(R¹)₂ where each R¹ is independently an hydrogen, alkyl, aryl, or alkylaryl. Suitable aryl groups for R¹, R¹², and substituents preferably have 6 to 12 carbon atoms. The aryl group often is phenyl. Suitable alkyl groups for R¹ have 1 to 10 carbon atoms and preferably 1 to 6 carbon atoms or 1 to 4 carbon atoms. Suitable arylalkyl groups for R¹, R¹², and substituents have an alkyl portion with 1 to 12 carbon atoms and preferably 1 to 8 carbon atoms or 1 to 4 carbon atoms and an aryl portion having 6 to 12 carbon atoms such as phenyl. Exemplary oil displacing agents of Formula (VIa) include but are not limited to alkyl oleates such as methyl oleate and alkyl benzoates such as isodecyl benzoate.

Suitable di-esters of use as oil displacing agents can be of Formula (VII)

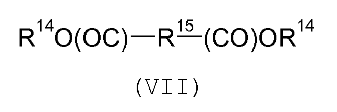

In Formula (VII), each group R¹⁴ independently is a linear or branched alkyl having at least 3 carbon atoms and preferably 3 to 20 carbon atoms, 3 to 18 carbon atoms, 3 to 12 carbon atoms or 3 to 8 carbon atoms. Group R¹⁵ is an alkane-diyl (i.e., an alkane-diyl is a divalent radical of an alkane and can be referred to as an alkylene), a heteroalkane-diyl (i.e., a heteroalkane-diyl is a divalent radical of a heteroalkane and can be referred to as a heteroalkene), or an alkene-diyl (i.e., an alkene-diyl is a divalent radical of an alkene). The alkane-diyl, heteroalkane-diyl, and alkene-diyl have at least 2 carbon atoms and preferably have 2 to 20 carbon atoms, 2 to 16 carbon atoms, 2 to 12 carbon atoms, or 2 to 8 carbon atoms. The heteroatom in the heteroalkylene-diyl can be oxy, thio, or -NH-. The alkane-diyl, heteroalkane-diyl, and alkene-diyl can be unsubstituted or substituted with a hydroxyl group, an amino group, an aryl group, or alkylaryl group. Suitable amino group substituents are of formula -N(R¹)₂ where R¹ is an hydrogen, alkyl, aryl, or alkylaryl. Suitable aryl groups for R¹ and substituents preferably have 6 to 12 carbons such as a phenyl group. Suitable alkylaryl groups for R¹ and substituents preferably have an alkyl portion with 1 to 12 carbon atoms and more preferably 1 to 8 carbon atoms or 1 to 4 carbon atoms and an aryl portion with 6 to 12 carbon atoms such as phenyl. Suitable alkyl groups for R¹ preferably have 1 to 12 carbon atoms and more preferably 1 to 8 carbon atoms or 1 to 4 carbon atoms. Exemplary di-esters of Formula (VII) include, but are not limited to, dialkyl maleates such as diethylhexyl maleate, dialkyl adipates such as diisobutyl adipate, dialkyl succinates such as diisobutyl succinate, dialkyl glutarates such as diisobutyl glutarate, dialkyl fumarates such as dibutyl fumarate, and dialkly glutamates such as dibutyl glutamate.

Suitable tri-esters for use as oil displacing agents can be of Formula (VIII)

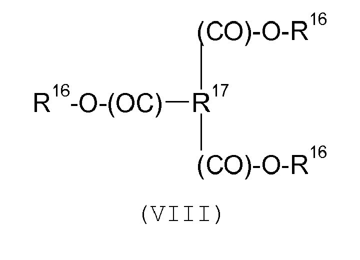

In Formula (VIII), each R¹⁶ group independently is a linear or branched alkyl having at least 3 carbon atoms and preferably 3 to 20 carbon atoms, 3 to 18 carbon atoms, 3 to 12 carbon atoms or 3 to 8 carbon atoms. Group R¹⁷ is an alkane-triyl (i.e., an alkane-triyl is a trivalent radical of an alkane), heteroalkane-triyl (i.e., a heteroalkane-triyl is a trivalent radical of a heteroalkane), or alkene-triyl (i.e., a alkene-triyl is a trivalent radical of an alkene). The alkane-triyl, heteroalkane-triyl, and alkene-triyl have at least 2 carbon atoms and preferably have 2 to 20 carbon atoms, 2 to 16 carbon atoms, 2 to 12 carbon atoms or 2 to 8 carbon atoms. The heteroatom in the heteroalkylene-diyl can be oxy, thio, or -NH-. The alkane-triyl, heteroalkane-triyl, and alkene-triyl can be unsubstituted or substituted with a hydroxyl group, an amino group, an aryl group, or alkylaryl group. Suitable amino group substituents are of formula -N(R¹)₂ where R¹ is an hydrogen, alkyl, aryl, or alkylaryl. Suitable aryl groups for R¹ and substituents preferably have 6 to 12 carbons such as a phenyl group. Suitable alkylaryl groups for R¹ and substituents preferably have an alkyl portion with 1 to 12 carbon atoms and more preferably 1 to 8 carbon atoms or 1 to 4 carbon atoms and an aryl portion with 6 to 12 carbon atoms such as phenyl. Suitable alkyl groups for R¹ preferably have 1 to 12 carbon atoms, 1 to 8 carbon atoms, or 1 to 4 carbon atoms. Exemplary compounds of Formula (VIII) include, but are not limited to, trialkyl citrates such as tributyl citrate.

The oil displacing agent can be selected from an epoxy alkane of Formula (IX)

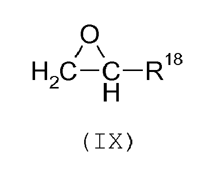

In Formula (IX), group R¹⁸ is an alkyl or perfluoroalkyl. The alkyl or perfluoroalkyl group can be linear, branched, cyclic, or a combination thereof. The alkyl or perfluoroalkyl group preferably has at least 3 carbon atoms such as 3 to 20 carbon atoms, 4 to 20 carbon atoms, 4 to 18 carbon atoms, 4 to 12 carbon atoms, or 4 to 8 carbon atoms. Exemplary compounds of Formula (IX) include, but are not limited to, 1H, 1H, 2H-perfluoro(1,2-epoxy)hexane, 3,3-dimethyl-1,2-epoxybutane, 1,2-epoxyoctane, 1,2-epoxyhexane, 1,2-epoxybutane, 1,2-epoxydodecane, 1,2-epoxydecane, and 1,2-epoxycyclopentane.

Suitable cyclic terpenes for use as oil displacing agents include, but are not limited to, limonene, alpha-pinene, beta-pinene, 1,8-cineole, and the like. Suitable cyclic terpene oxides include, but are not limited to, limonene oxide and alpha-pinene oxide.

Trialkyl phosphates suitable for use as oil displacing agents preferably have alkyl groups with 2 to 10 carbon atoms. Some exemplary trialkyl phosphates include, but are not limited to, tripropyl phosphate, triethylphosphate, and tributyl phosphate.

Alkyl methacrylates that can be used as oil displacing agents preferably include an alkyl group with at least 4 carbon atoms, at least 6 carbon atoms, or at least 8 carbon atoms. For example, the alkyl group can have 6 to 20 carbon atoms, 6 to 18 carbon atoms, 6 to 12 carbon atoms or 6 to 10 carbon atoms. The alkyl in the alkyl methacrylate can be cyclic, linear, branched, or a combination thereof. Examples include but are not limited to isodecyl methacrylate, 3,3,5-trimethylcyclohexyl methacrylate. Vinyl alkyl esters suitable for use as oil displacing agents preferably have an alkyl group that has at least 2 carbon atoms and more preferably at least 4 carbon atoms or at least 6 carbon atoms. For example, the alkyl group may have 2 to 20 carbon atoms and more preferably 4 to 20 carbon atoms, 4 to 18 carbon atoms, 4 to 12 carbon atoms or 4 to 8 carbon atoms. The alkyl in the vinyl alkyl ester can be cyclic, linear, branched, or a combination thereof. Examples include but are not limited to VEOVA 10, a vinyl ester of a highly branched carboxylic acid having 10 carbon atoms. VEOVA 10 is a trade designation of Hexion Specialty Chemicals in Columbus, OH.

Alkyl trialkoxysilane compounds that can be used as oil displacing agents preferably include an alkyl group having 1 to 10 carbon atoms and more preferably 2 to 10 carbon atoms or 2 to 6 carbon atoms. The alkyl group can be unsubstituted or substituted with an amino group such as a primary amino group. The alkoxy groups preferably have 1 to 6 carbon atoms and more preferably 1 to 4 carbon atoms or 1 to 3 carbon atoms. Examples include, but are not limited to, 3-aminopropyltriethoxysilane.

Alkanes that can be used as oil displacing agents preferably contain at least 6 carbon atoms. For example the alkanes may preferably have at least 8 carbon atoms, at least 10 carbon atoms or at least 12 carbon atoms. Examples include, but are not limited to, n-heptane, n-decane, n-undecane, and n-dodecane.

Alcohols that can be used as the oil displacing agents preferably contain at least 6 carbon atoms and more preferably at least 8 carbon atoms or at least 12 carbon atoms. Examples include but are not limited to 1-octanol, 2-octanol, and 1-decanol.

Table 1 includes surface tension values and solubility parameter values for exemplary oil displacing agents.

**Table 1: Characteristics of Various Oil Displacing Agents**

| **Oil Displacing Agent** | **Surface Tension (dynes/cm)** | **Solubility Parameter (cal**^{0.5}**/cm**^{1.5}**)** |
|---|---|---|
| 1H, 1H, 2H-Perfluoro(1,2-Epoxy) hexane | 15.6 | 9.43 |
| 3-[2-(Perfluorohexyl)ethoxy]1,2-Epoxypropane | 18.3 | 9.17 |
| 3,3-Dimethyl-1,2-Epoxybutane | 21.4 | 8.11 |
| 1,2-Epoxyoctane | 23.2 | 8.12 |
| 1,2-Epoxyhexane | 23.9 | 8.31 |
| 1,2-Epoxybutane | 24.3 | 8.31 |
| 1,2-Epoxydodecane | 25.1 | 8.08 |
| 1,2,7,8-Diepoxyoctane | 26.6 | 9.07 |
| 1,2-Epoxydecane | 27.8 | 8.10 |
| 1,2-Epoxycyclopentane | 30.4 | 9.13 |
| Cyclohexene Oxide | 31.6 | 8.93 |
| n-Decane | 22.7 | 7.41 |
| n-Heptane | 20.3 | 7.19 |
| 1-Octanol | 25.2 | 9.66 |
| 2-Octanol | 26.5 | 9.57 |
| 3-aminopropyltriethoxysilane | 23.5 | 9.37 |
| VEOVA 10 | 23.8 | 8.42 |
| a-Pinene | 26.3 | 8.06 |
| b-Pinene | 27.8 | 8.33 |
| Limonene | 26.9 | 8.02 |
| 1,8-Cineole | 29.3 | 8.65 |
| b-Pinene Oxide | 30.2 | 9.00 |
| Limonene Oxide | 31.4 | 8.80 |
| a-Pinene Oxide | 31.4 | 8.89 |
| Methyl Oleate | 29.0 | 8.19 |
| Isodecyl Benzoate | 29.6 | 9.19 |
| Dimethyl Adipate | 31.2 | 9.58 |
| Dibutyl Maleate | 27.6 | 9.08 |
| Dibutyl Fumarate | 28.7 | 9.08 |
| Diethylhexyl Maleate | 25.6 | 8.60 |
| Triethyl Citrate | 32.1 | 11.10 |
| Tributyl Citrate | 26.9 | 10.24 |
| Tributyl Phosphate | 26.9 | 9.17 |
| CARDURA N-10 | 28.9 | 8.84 |
| 3,3,5-Trimethylcyclohexyl Methacrylate | 26.7 | 8.10 |
| 1,3-Bis(Glycidoxypropyl)-tetramethyldisiloxane | 30.4 | 8.63 |
| 2,(3,4-Epoxycyclohexyl)-Ethyl Trimethoxysilane | 31.2 | 8.70 |

The curable adhesive compositions preferably contain at least 0.01 weight percent of the oil displacing agent based on a total weight of the curable adhesive composition. The amount is more preferably at least 0.05 weight percent, at least 0.1 weight percent, at least 0.2 weight percent, at least 0.5 weight percent, or at least 1 weight percent. The curable adhesive composition can preferably include up to 25 weight percent and more preferably up to 20 weight percent, up to 15 weight percent or up to 10 weight percent of the oil displacing agent. In many embodiments, the oil displacing agent is preferably present in an amount in the range of 0.1 to 25 weight percent and more preferably in the range of 0.5 to 20 weight percent, in the range of 1 to 20 weight percent, in the range of 1 to 10 weight percent or in the range of 2 to 10 weight percent.

Some preferred curable adhesive compositions contain at least 20 weight percent epoxy resin, at least 3 weight percent curing agent, at least 5 weight percent reactive liquid modifier, at least 5 weight percent toughening agent, and at least 0.1 weight percent oil displacing agent based on a total weight of the curable adhesive composition. Some other preferred curable adhesive compositions contain 20 to 90 weight percent epoxy resin, 3 to 30 weight percent curing agent, 3 to 20 weight percent reactive liquid modifier, 5 to 55 weight percent toughening agent, and 0.1 to 25 weight percent oil displacing agent based on a total weight of the curable adhesive composition. Other preferred curable adhesive compositions contain 20 to 70 weight percent epoxy resin, 3 to 20 weight percent curing agent, 4 to 15 weight percent reactive liquid modifier, 5 to 40 weight percent toughening agent, and 0.5 to 20 weight percent oil displacing agent. Still other preferred curable adhesive compositions contain 30 to 60 weight percent epoxy resin, 5 to 20 weight percent curing agent, 4 to 10 weight percent reactive liquid modifier, 5 to 30 weight percent toughening agent, and 1 to 10 weight percent oil displacing agent. The amounts are based on the total weight of the curable adhesive composition.

Other optional components such as fillers can be added to the curable adhesive compositions. The fillers can be added to the first part of the curable adhesive composition, to the second part of the curable adhesive composition or to both the first part and the second part of the curable adhesive composition. Fillers are often added to promote adhesion, to improve corrosion resistance, to control the rheological properties of the adhesive, to reduce shrinkage during curing, to accelerate curing, to absorb contaminants, to improve heat resistance and/or for any combination thereof. The fillers can be inorganic material, organic materials, or composite materials containing both inorganic and organic materials. The fillers can have any suitable size and shape. Some fillers are in the form of particles with spherical, elliptical, or platelet shapes. Other fillers are in the form of fibers.

Some fillers are inorganic fibers such as fiber glass (e.g., glass wool and glass filament), mineral wool (e.g., rock wool and slag wool), and refractory ceramic fibers. Some exemplary inorganic fibers include a mixture of SiO₂, Al₂O₃ or a combination thereof. The inorganic fibers can further include CaO, MgO, Na₂O, K₂O, Fe₂O₃, TiO₂, other oxides or mixtures thereof. Suitable inorganic fibers are commercially available under the trade designation COATFORCE (e.g., COATFORCE CF50 and COATFORCE CF10) from Lapinus Fibres BV in Roermond, The Netherlands. Other exemplary inorganic fibers can be prepared from wollastonite (i.e., calcium silicate).

Other fillers are organic fibers such as aramid fibers and polyolefin fibers such as polyethylene fibers. These organic fibers can be untreated or treated to change their hydrophobic or hydrophilic character. For example, some organic fibers are specially treated to make them hydrophobic or to increase their hydrohobicity. The fibers can be fibrillated. Suitable polyolefin fibers include high-density polyethylene fibers such as those available under the trade designation SYLOTHIX (e.g., SYLOTHIX 52 and SYLOTHIX 53) from EP Minerals in Reno, NV, those available under the trade designation ABROTHIX (e.g., ARBOTHIX PE100) from EP Minerals, those available under the trade designation SHORT STUFF (e.g., SHORT STUFF ESS2F and SHORT STUFF ESS5F) from MiniFIBERS, Inc. in Johnson City, TN, and those available under the trade designation INHANCE (e.g., INHANCE PEF) from Inhance/Fluoro-Seal, Limited in Houston, TX. Exemplary aramid fibers are commercially available under the trade designation INHANCE (e.g., INHANCE KF) from Inhance/Fluoro-Seal, Ltd. in Houston, TX.

Other suitable fillers include silica-gels, calcium silicates, calcium nitrate, calcium phosphates, calcium molybdates, calcium carbonate, calcium hydroxide, fumed silica, clays such as bentonite, organo-clays, aluminium trihydrates, glass microspheres, hollow glass microspheres, polymeric microspheres and hollow polymeric microspheres. The fillers can also be a pigment such as ferric oxide, brick dust, carbon black, titanium oxide and the like. Any of these filler can be surface modified to make them more compatible with the curable or cured adhesive composition.

Exemplary fillers include a mixture of synthetic amorphous silica and calcium hydroxide that is commercially available from W.R. Grace in Columbia, MD under the trade designation SHIELDEX (e.g., SHIELDEX AC5), a fumed silica treated with polydimethylsiloxane to prepare a hydrophobic surface that is available from Cabot GmbH in Hanau, Germany under the trade designation CAB-O-SIL (e.g., CAB-O-SIL TS 720), a hydrophobic fumed silica available from Degussa in Düsseldorf, Germany under the trade designation AEROSIL (e.g., AEROSIL VP-R-2935), glass beads class IV (250 to 300 micrometers) from CVP S.A. in France and epoxysilane-functionalized (2 wt %) aluminium trihydrate available under the trade designation APYRAL 24 ESF from Nabaltec GmbH in Schwandorf, Germany.

In some embodiments, fillers with oleophilic surfaces are included in the curable adhesive compositions. Without wishing to be bound by such theory it is believed that these fillers may absorb at least some of the hydrocarbon-containing material at the surface of an substrate thus enhancing the adhesive bond.

The curable adhesive composition may contain any suitable amount of the filler. In preferred embodiments, the curable adhesive composition contains 0.01 to 50 weight percent filler based on a total weight of the curable adhesive composition. The amount can more preferably be in the range of 0.5 to 50 weight percent, in the range of 1 to 40 weight percent, in the range of 1 to 30 weight percent, in the range of 1 to 20 weight percent, in the range of 1 to 10 weight percent, in the range of 5 to 30 weight percent or in the range of 5 to 20 weight percent.

The curable adhesive composition can include any number of other optional components. For example, an optional adhesion promoter can be added. Exemplary adhesion promoters include but are not limited to various silane compounds. Some silane compounds that are suitable for adhesion promoters have amino groups or glycidyl groups that can react with one or more components in the curable adhesive composition. Other exemplary adhesive promoters include various chelating agents such as those described in U.S. Patent No. 6,632,872 (Pellerite et al.) and various chelate-modified epoxy resins such as those available from Adeka Corporation in Tokyo, Japan under the trade designation EP-49-10N and EP-49-20.

Solvents may furthermore be included in the curable adhesive composition. If present, the solvents are preferably selected to be miscible with the curable adhesive composition. Solvents can be added to lower the viscosity of either the first part or the second part of the curable adhesive composition or can be added with one of the various components included in the curable adhesive composition. The amount of solvent is preferably minimized and is particularly less than 10 weight percent based on a total weight of the curable adhesive composition. The solvent is more preferably less than 8 weight percent, less than 6 weight percent, less than 4 weight percent, less than 2 weight percent, less than 1 weight percent or less than 0.5 weight percent based on the total weight of the curable adhesive composition. Suitable organic solvents include those that are soluble in the curable adhesive composition and that can be removed during or after curing to form the cured adhesive composition. Exemplary organic solvents include, but are not limited to, toluene, acetone, various alcohols, and xylene.

The curable adhesive composition is in the form of a first part and a second part. The first part preferably includes the epoxy resins, the reactive liquid modifier, plus other components that do not react with either the epoxy resin or the reactive liquid modifier. The second part preferably includes the curing agent plus any other components that do not typically react with the curing agent. The toughening agent and the oil displacing agent can each be added independently to either the first part or the second part. The components in each part are preferably selected to minimize reactivity within each part.

The curable composition may include one or more additional parts such as a third part that can contain additional components or that can further separate the components of the curable adhesive composition. For example, the epoxy resin can be in a first part, the curing agent can be in a second part, and the reactive liquid modifier can be in a third part. The toughening agent and the oil displacing agent can each independently be in any of the first, second, or third parts.

The various parts of the curable adhesive composition are mixed together to form the cured adhesive composition. These parts are typically mixed together immediately prior to the use of the curable adhesive composition. The amount of each part included in the mixture is preferably selected to provide the desired molar ratio of oxirane groups to amine hydrogen atoms and the desired molar ratio of reactive liquid modifier to amine hydrogen atoms.

The curable adhesive composition can be cured, for example, at room temperature, can be cured at room temperature and then at an elevated temperature or at an elevated temperature (e.g., greater than 100°C, greater than 120°C, or greater than 150°C). It is also possible to initiate curing of the curable adhesive composition at room temperature but then raise the temperature to an elevated temperature to accelerate curing, In some embodiments, the adhesive is preferably cured at room temperature for at least 3 hours and more preferably for at least 6 hours, at least 12 hours, at least 18 hours, at least 24 hours, at least 48 hours or at least 72 hours. In other embodiments, the adhesive is preferably cured at room temperature for any suitable length of time and then further cured at an elevated temperature such as, for example, of 180°C for a time up to 10 minutes or more preferably of up to 20 minutes, up to 30 minutes, up to 60 minutes, up to 120 minutes or even for longer than 120 minutes.

The adhesive compositions may reach a desirable cohesive strength after short heat curing periods. Since the cohesive strength can often increases upon further curing under the same or different conditions, this kind of curing is referred to herein as partial curing. In principle, partial curing can be carried out using any kind of heating. In some embodiments, induction curing (e.g., spot induction curing or ring induction curing) may be used for partial curing. Induction curing is a non-contact method of heating using electric power to generate heat in conducting materials by placing an inductor coil through which an alternating current is passed in proximity to the cured adhesive composition. The alternating current in the coil generates an electromagnetic field that creates a circulating current in the adhesive composition and/or the substrate it is attached to. This circulating current in the adhesive composition and/or the substrate it is attached to flows against the resistivity of the material and generates heat. Induction curing equipment can be commercially obtained, for example, from IFF-GmbH in Ismaning, Germany. The induction curing may preferably occur, for example, at temperatures in the range of 80°C to 180°C with exposure times of up to 120 seconds and more preferably of up to 90 seconds, up to 60 seconds, up to 45 seconds or up to 30 seconds. In yet a further embodiment, adhesive compositions may undergo an induction cure followed by further curing at room temperature, an elevated temperature or both.

The cured adhesive compositions typically form a robust bond with one or more substrates. A bond is typically considered to be robust if the bond breaks apart cohesively at high shear values when tested in an overlap shear test and/or if high T-peel strength values are obtained when tested in a T-peel test. The bonds may break in three different modes: (1) the adhesive splits apart, leaving portions of the adhesive adhered to both metal surfaces in a cohesive failure mode; (2) the adhesive pulls away from either metal surface in an adhesive failure mode; or (3) a combination of adhesive and cohesive failure (i.e., mixed mode failure).

The cured adhesive composition can typically adhere to clean metal surfaces and to metal surfaces contaminated with hydrocarbon-containing materials such as various oils and lubricants. The cured adhesive composition preferably has a cohesive strength, as measured by overlap shear strength, of at least 2500 psi (17.2 MPa). More preferably, the overlap shear strength is at least 3000 psi (20.7 MPa), at least 3200 psi (22.1 MPa) or at least 3500 psi (24.1 MPa).

The cured adhesive compositions may be used to supplement or completely eliminate a weld or mechanical fastener by applying the curable adhesive composition between two parts (i.e., between two surfaces of two substrates) to be joined and curing the adhesive to form a bonded joint. Suitable substrates onto which the adhesive of the present invention may be applied include metals (e.g., steel, iron, copper, aluminum, or alloys thereof), carbon fiber, glass fiber, glass, epoxy fiber composites, wood, and any combination thereof. In some embodiments, at least one of the substrates is a metal. In other embodiments, both substrates are metal.

The surface of the substrates may be cleaned prior to application of the curable adhesive composition. However, the adhesives compositions are also useful in applications when applied to substrates having hydrocarbon-containing material on the surface. In particular, the curable adhesive compositions may be applied to steel surfaces contaminated with various oils and lubricants such as, for example, mill oil, cutting fluid, and draw oil.

In areas of adhesive bonding, the curable adhesive composition may be applied as liquid, paste, spray, or solid that can be liquefied upon heating. The curable adhesive composition can be applied as a continuous film or as dots, stripes, diagonals or any other geometrical form that will result in the formation of a useful bond. In some embodiments, the curable adhesive composition is in a liquid or paste form.

If desired, the bond provided by the cured adhesive composition can be supported by welding or mechanical fastening. The welding can occur as spot welds, as continuous seam welds, or as any other welding technology that can cooperate with the adhesive composition to form a mechanically sound joint.

The cured adhesive compositions may be used as structural adhesives. In particular, they may be used as structural adhesives in vehicle assembly, such as the assembly of watercraft vehicles, aircraft vehicles, or motorcraft vehicles such as cars and motor bikes. In particular, the adhesive compositions may be used as hem-flange adhesives or in body frame constructions. The adhesive compositions may also be used as structural adhesives in architectural applications or as structural adhesives in various household and industrial appliances.

A further object of the present invention is directed to a cured adhesive composition comprising the reaction product of a curable adhesive composition according to this invention. In this context, the reaction product is obtained by mixing the first and second part of the curable adhesive composition and bringing this mixture to a suitable temperature at which the polymerisation reaction starts.

The present invention is also directed to a bonded article comprising first and second surfaces facing each other with a cured adhesive composition according to this invention being sandwiched between the first and second surfaces. The first and second surfaces of the bonded article may be cleaned, especially defatted before they are covered with the curable adhesive composition. However, the first and/or second surface may also be covered with an oil layer, in other words, a cleaning step is not necessary.

The bonded article may also be configured as a composite article. In that case, it is possible to sandwich a multitude of adhesive composition layers alternately arranged between layers of a flat substrate, like carbon fiber mats, glass fiber mats or polymer fiber mats.

Another object of this invention is a method for bonding at least two substrates together comprising the steps of:
- mixing first and second parts of a curable adhesive composition according to this invention in an appropriate ratio, covering one or both substrates at least partly with the mixed adhesive composition,
- bringing the substrates into contact in the section covered with the mixed adhesive composition and
- allowing the mixed adhesive composition to cure.

The composition may be used, for example, to bond metals to metals, metals to carbon fibers, carbon fibers to carbon fibers, metals to glass or carbon fibers to glass.

According to a preferred embodiment of this method, one or both of the substrates are covered with an oil layer which is not removed before applying the mixed adhesive composition.

The present invention is also directed to the use of an epoxy-amine and/or epoxy-thiol adduct obtainable by reacting at least one primary amine, secondary amine and/or a thiol with at least one polyol compound comprising at least one terminal epoxy group, as a curing agent for a curable epoxy resin wherein the polyol compound preferably comprises epoxidized poly-THF.

Finally, this invention relates to the use of an epoxy-amine and/or epoxy-thiol adduct obtainable by reacting at least one primary amine, secondary amine and/or a thiol with at least one polyol compound comprising at least one terminal epoxy group, as a curing agent for a two-part curable epoxy adhesive wherein the polyol compound preferably comprises epoxidized poly-THF.

Objects and advantages of this invention are further illustrated by the following examples, but the particular materials and amounts thereof recited in these examples as well as other conditions and details should not be construed to unduly limit this invention. These examples are for illustrative purposes only and are not meant to limit the scope of the appended claims.

The following Table 2 gives an overview of the materials used:

**Table 2: glossary of materials used**

| **Material** | **Description** |
|---|---|
| Epon 828 | standard DGEBA-Epoxy resin from Hexion |
| Epodil 757 | reactive diluent (glycidyl ether of cyclohexane dimethanol) from Air Products |
| Eponex 1510 | hydrogenated bisphenol A diglycidylether from Hexion |
| EP-49-10N | chelate modified epoxy resin having an equivalent weight of 214 g/eq. It was purchased from Adeka, Japan |
| DEN 431 | Epoxy Novolac from Dow |
| Cardura E10P | glycidyl ester of Versatic^{™} acid 10 available from Hexion |
| Kane Ace MX 257 | masterbatch of core shell particles (37 %) in a standard DGEBA resin (Epon 828 or equivalent). The core is made of a neat polybutadiene polymer. The shell is made of PMMA. It is available from Kaneka |
| K-Flex XM B301 | acetoacetoxy-functionalized low MW polyester available from King Industries |
| Grilonit F713 | liquid polyTHF diglycidyl ether available from EMS Primid (Switzerland) having a MW of 780 g/mol |
| | |
| Calcium Nitrate Tetrahydrate | Ca(NO₃)₂ x 4H₂O, VWR International GmbH, Darmstadt, Germany |
| Hypro 1300*21 | standard ATBN liquid rubber, available from Emerald Materials having an amine equivalent weight of 1200 |
| Silane Z-6030 | the γ-glycidoxypropyltrimethoxysilane, available from DOW-Corning |
| Shiedex AC5 | corrosion inhibitor, available from W.R. Grace & Co. |
| Glass beads class IV 300µm | used to define the thickness of the adhesive layer between the metal substrates (from CVP France) |
| Apyral 24 | aluminium trihydrate filler, available from Nabaltec |
| Jeffamine EDR 176 (3,3'-ethylenedioxybis(propylamine) | curing agent, available from Huntsman |
| 1,3-BAC (Bis Aminomethyl Cyclohexane) | cycloaliphatic diamine available from Mitsubishi Chemicals |
| Ancamine K 54 | tris-(dimethylaminomethyl)-phenol, accelerator, catalyst, available from Air Products |
| Twaron 3091 | highly fibrillated aramid pulp from Teijin. The fibre length is between 0,7 and 1,1 mm, the specific surface area is around 10m²/g |
| Platinol B 804/3 COW-1 | draw lube oil from Oest |

### Overlap sheer strength (OLS)

Overlap shear specimens were made using steel test specimens of 100 mm by 25 mm by 2 mm made from non-treated steel strips (DC04 from Rocholl, Germany). The overlap shear specimens were cleaned with n-heptane and the adhesive applied on one end of a strip with a spatula and then covered by another strip. The two ends were pressed together and the overlap was adjusted at 13 mm. Excess adhesive was removed with a spatula. The overlapped strips were clamped together using two binder clips. The adhesive was then cured at room temperature for 24 hours and 30 min in an oven at 180 °C.

After the adhesive had been allowed to cure, the bonds were tested to failure at room temperature to determine the overlap shear strength (OLS) as described in DIN EN 1465 using a Zwick Z050 tensile tester operating at a crosshead speed of 10 mm/min. The results are given in MPa.

### Adhesive strength (T-peel strength)

Adhesive strength was measured on oily and clean phosphated steel substrates, respectively. The T-peel strength was determined according to DIN EN 1464 using a Zwick Z050 tensile tester operating at a crosshead speed of 100 mm/min. The results are reported in N/25mm.

For the measurements on the clean substrates, 150 x 25 x 0,78 mm phosphated steel panels (DC04 ZEP 75/75 from Thyssen Krupp, Germany) were cleaned with n-heptane. The panels were masked with a crepe tape leaving an area of 100 x 25 mm. The adhesive was applied on this area and then covered by a second panel. The two panels were assembled and pressed together; residual adhesive was removed with a spatula. The assembly was clamped together using binder clips over the length of the bond line. The assembly was then cured for 24 hours at room temperature (RT) and then 30 min in the oven at 180°C.

For the determination of adhesive strength on oily steel panels a specified volume of platinol B 804/3 COW-1 from Oest, Germany, was applied to the substrate surfaces to achieve a coating of 3 g/m² for the area to be coated using density data obtained from the appropriate oil MSDS. The test samples used for these experiments were phosphated steel panels DC04 ZEP75/75 from Thyssen Krupp, Germany, which were cut into the dimension of 150 x 25 x 0,78 mm. A clean finger tip of a nitrile glove was used to carefully spread the oil uniformly over the surface. Once the surface was covered the metal panels were stored at room temperature for 24 hours prior to use.

The adhesive bonds were then generated following the same procedure as for the clean panels. The T-peel strength was determined according to DIN EN 1464 using a Zwick Z050 tensile tester operating at a crosshead speed of 100 mm/min. The results are reported in N/25mm.

### Crash resistance (Dynamic wedge impact, DWI)

Dynamic wedge impact performance was determined according to ISO method 11343. The test was performed using the Dynatup Impact Test Machine, Model 9200 from Instron (Norwood, USA). The samples were phosphated steel trips 100 x 20 x 0,78 mm DC04 ZEP 75/75 from Thyssen Krupp, Germany. After cleaning with n-heptane they were marked with a PTFE Tape (3M 5490) leaving an area of 30 x 20 mm. The panels were then bent at the 30mm mark with an angle of 4,5°. The adhesive was applied on the 30 x 20 mm area of one panel and covered by another bent panel. The two strips were pressed together and two binder clips were applied along the bond line. The adhesive was cured for 24 hours at room temperature and 30 min in the oven at 180°C.

The specimens were placed on the test wedge having an angle at the summit of 9°. A weight of 21 kg falls with a speed of 3 m/s before it hits the specimen. During the impact the wedge is driven into the bond line. The energy which is dissipated by the adhesive bond is directly calculated from the force-displacement diagram and is given in Joules.

### Preparation of the adhesives

B-parts: Kane ace MX257 and aramid fibers (Twaron 3091) were weight in a plastic can and mixed with a speedmixer for 1 min at 3500 rpm. Then, the other components are added and mixed with a speedmixer for 2 min at 3500 rpm. The B-parts are then degassed under vacuum.

The A-parts are all based on a amine epoxy adduct. The amine, Eponex 1510 and Grilonit F713 are mixed in a glass device equipped with mechanical stirrer and thermometer for one hour at 50°C. The mixture is then heated up at 80°C and the calcium nitrate is added in one step and stirred for 1 hour at 80°C. The mixture is then cooled down, the Ancamine K54 is added and stirred overnight. The other additives or fillers are then added and mixed using a speedmixer (2 min, 3500 rpm). The parts are degassed under vacuum.

For all presented experiments in this application, the average and standard deviation were calculated from the results of at least three tests unless otherwise noted.

### Mixing of the adhesives parts:

A and B parts of the adhesives were put into a 1:4 cartridge (volume ration) and extruded through a static mixer (Mixpac from Sulzer, 24 mixing units, 10 mm diameter) with an application gun at 2 bars.

The adhesive compositions with F713 are summarized in Tables 3 and 5, respectively, whereas E4, E6 and E7 are comparative examples. Griloni F713 is a liquid polyTHF diglycidyl ether available from EMS Primid (Switzerland) having a MW of 780 g/mol. It is liquid at room temperature which makes it suitable for 2-component paste adhesives. It is particularly versatile because it can be added in the B-part or adducted with an amine in the A-part of the adhesive. Its high equivalent weight makes it easy to adjust volume ratios of paste adhesives.

**Table 3: Compositions E1 to E4**

| **Example** | **E1** | **E2** | **E3** | **E4 (*)** |
|---|---|---|---|---|
| B-parts | | | | |
| MX257 | 46,14 | 42,21 | 27,43 | 41,40 |
| Epon 828 | 5,02 | 10,09 | 22,35 | 9,90 |
| Eponex 1510 | | 7,34 | 8,13 | 7,20 |
| DEN 431 | | 8,26 | 9,14 | 8,10 |
| EP-49-10N | 5,02 | | | |
| Cardura E10P | 2,01 | 2,29 | 2,54 | 2,25 |
| Epodil 757 | 10,53 | | | |
| K-Flex | 4,01 | 2,75 | 2,54 | 2,70 |
| Silane Z6040 | 1,50 | 0,92 | 1,0 | 0,90 |
| Shieldex AC5 | 2,01 | 2,75 | 3,05 | 2,70 |
| Apyral 24 | 3,51 | 3,21 | 3,56 | 3,15 |
| Twaron 3091 | 0,80 | 0,83 | 0, 91 | 0,81 |
| Glass beads | 1,00 | 1,01 | 1,12 | 0,99 |
| Class IV | | | | |
| Yellow pigment | 0,05 | 0,05 | 0,05 | 0,05 |
| | | | | |
| A-parts | | | | |
| EDR176 | 7,74 | 7,69 | 7,63 | 7,79 |
| Eponex 1510 | 3,52 | 3,50 | 3,47 | 6,14 |
| F713 | 4,92 | 4,89 | 4,86 | |
| Ancamine K54 | 1,78 | 1,77 | 1,76 | 1,98 |
| Calcium nitrate | 0,42 | 0,42 | 0,42 | 0,42 |
| Twaron 3091 | | | | 0,19 |
| Apyral 24 | | | | 3,31 |
| Blue pigment | 0,02 | 0,02 | 0,02 | 0,02 |

The results obtained with these formulations are described in Table 4.

**Table 4: Performances of adhesive compositions containing polyTHF diglycidylether Grilonit F713**

| Example | E1 | E2 | E3 | E4 (*) |
|---|---|---|---|---|
| % neat core shell (from MX257) | 17 | 15, 6 | 10,0 | 15,3 |
| % F713 | 4,9 | 4,9 | 4,9 | 0 |
| T-Peel (N/25mm) | 229±9 | 157±11 | 153±5 | 155±13 |
| T-Peel COW-1 | 285¹⁾ | 99±12 | 48±23 | 73+17 |
| OLS (MPa) | 24,7±0,8 | 26,9±0,4 | 31,1±0,8 | 29,6±1,0 |
| DWI RT (J) | 23,6±2,2 | 21,6±0,7 | 16,7±1,0 | 4,0±1,0 |

| | | | | |
|---|---|---|---|---|
| ¹⁾ T-Peel on DC 04 ZE 50/50 oiled with 3g/m² COW-1 (electro galvanized steel), all the other examples are on phosphated steel DC04 ZEP 75/75 from Thyssen Krupp. (*) Comparative example | | | | |

Example E1 with 5% F713 shows excellent oil uptake properties (285 N/25mm on galvanized steel oiled with 3g/m² COW-1) and a very high impact strength (23,6 J). It is also possible by adding DEN 431, a novolac epoxy resin, to reach very high adhesive strength and outstanding impact strength when incorporating F713(E2, E3).

Example E2 shows that with 5% F713 the impact strength is multiplied by a factor five when compared to the same construction without F713 (E4).

Example E3 shows very high impact strength (17 J) with only 10% core shell material (MX257) in the formulation and very high shear strength.

The following Table 5 gives another example, according to which F713 is adducted with 1,3-BAC, a cycloaliphatic amine. The Examples 6 and 7 are comparative examples. Due to the methylene spacer between the amine group and the cyclohexane ring, 1,3-BAC is a very fast curing cycloaliphatic amine which makes it suitable for adhesive systems where fast curing is important, whereas cycloaliphatic amines are normally very slow in curing speed.

**Table 5: Adhesive compositions with an adduct of 1,3-BAC and F713 (in weight %)**

| | **E5** | **E6 (*)** | **E7 (*)** |
|---|---|---|---|
| B-Part | | | |
| MX257 | 46,92 | 46,11 | 46,28 |
| Epon 828 | 5,10 | 6,01 | 5,03 |
| EP-49-10N | 5,10 | 5,01 | 5,03 |
| Cardura E10P | 2,04 | 2,00 | 2,01 |
| Epodil 757 | 10,71 | 10,02 | 10,56 |
| K-Flex | 4,08 | 4,01 | 4,02 |
| Silane Z6040 | 1,53 | 1,50 | 1,51 |
| Shieldex AC5 | 2,04 | 3,01 | 2,01 |
| Apyral 24 | 3,57 | 7,02 | 3,52 |
| Twaron 3091 | 0,82 | 0,80 | 0,80 |
| Glass beads Class IV | 1,02 | 1,00 | 1,01 |
| Yellow pigment | 0,05 | 0,05 | 0,05 |
| | | | |
| A-Part | | | |
| 1,3-BAC | 6,28 | 6,08 | 5,86 |
| Eponex 1510 | 3,14 | 5,06 | 4,83 |
| F713 | 5,23 | | |
| Hypro ATBN 1300*21 | | | 5,17 |
| Calcium Nitrate | 0,42 | 0,41 | 0,38 |
| Ancamine K54 | 1,94 | 1,87 | 1,90 |
| Blue pigment | 0,03 | 0,03 | 0,02 |

| | | | |
|---|---|---|---|
| (*) Comparative examples | | | |

The adhesive performances of the Examples E5 to E7 are summarized in Table 6.

**Table 6: Adhesive performances of constructions having 1,3-BAC as a curing agent**

| | E5 | E6 (*) | E7 (*) |
|---|---|---|---|
| % 1,3-BAC | 6,28 | 6,08 | 5,86 |
| % Core shell | 17,35 | 17,06 | 17,12 |
| % F713 | 5,23 | | |
| % Hypro 1200*21 | | | 5, 17 |
| T-Peel (N/25mm) | 195±7 | 151±6,4 | Not measurable |
| OLS (MPa) | 25,2±0,8 | 27,0±0,4 | 22,8±1 |
| DWI (J) | 13,5±0,4 | 1,2±0,3 | 7,5±0,8 |

| | | | |
|---|---|---|---|
| (*) Comparative examples | | | |

Example 6 clearly shows that 1,3-BAC leads to very brittle systems providing very poor impact strength (1,2 J). When adding 5% of F713 (E5), the system becomes crash resistant (13,5 J). Comparative example E7 where 5% of ATBN is used, shows clearly poorer impact strength and inferior adhesion properties.

## Claims

1. A curable adhesive composition comprising a first part and a second part, the curable adhesive composition comprising:
in the first part at least one epoxy resin and in the second part at least one curing agent in the form of an epoxy-amine and/or epoxy-thiol adduct obtainable by reacting at least one primary amine, secondary amine and/or
a thiol with at least one polyol compound comprising at least one terminal epoxy group.

2. The curable adhesive composition according to claim 1 **characterized in that** the polyol compound is selected from a group comprising polyester polyols, polyether polyols, poly(meth)acrylate homo- and copolymers, copolymers of butadienen with styrene, acryl nitrile, polyurethane polyols, polyurea polyols, polycarbonate polyols, polyols from renewable sources or mixtures thereof.

3. The curable adhesive composition according to claim 1 or 2 **characterized in that** the primary and secondary amine are selected from a group comprising aliphatic, cycloaliphatic or aromatic amines or combinations thereof, polyetheramines, polyamidoamines, polyamides, Mannich bases or mixtures thereof.

4. The curable adhesive composition according to any of the preceding claims **characterized in that** the thiol is selected from a group comprising aliphatic, cycloaliphatic, aromatic thiols or combinations thereof.

5. The curable adhesive composition according to any of the preceding claims **characterized in that** the epoxy-amine and/or epoxy-thiol adduct has an Mw of 100 to 100,000 g/mol.

6. The curable adhesive composition according to any of the preceding claims **characterized in that** the polyol compound is poly-THF having a continuous sequence of at least 5 tetramethylene oxide units.

7. The curable adhesive composition according to claim 6 **characterized in that** the mass contents of poly-THF in the epoxy-amine and/or epoxy-thiol adduct is at least 20 wt.-%.

8. The curable adhesive composition according to any of the preceding claims **characterized in that** the polyol compound is liquid at 25°C and has preferably an Mw of 1200 g/mol or less.

9. The curable adhesive composition according to any of the preceding claims **characterized in that** the first part further comprises a toughening agent.

10. The curable adhesive composition according to claim 9 **characterized in that** the toughening agent is selected from rubber particles, preferably polybutadiene rubber particles, butadiene copolymers, acrylate copolymers or mixtures thereof, especially as core shell particles, the shell being acrylate or methacrylate polymers or copolymers.

11. The curable adhesive composition according to any of the preceding claims **characterized in that** the epoxy resin comprises a polyether polyol having two to four glycidyl groups, preferably poly-THF glycidyl ether having two to four glycidyl groups.

12. The curable adhesive composition according to any of the preceding claims **characterized in that** the first and/or second part comprises at least one substance selected from a group comprising reactive liquid modifiers, oil-displacing agents, corrosion inhibitors, anti-oxidants, fillers, plasticizers, further curing agents and accelerators.

13. A cured adhesive composition comprising the reaction product of a curable adhesive composition according to any of the claims 1 to 12.

14. A bonded article, comprising first and second surfaces facing each other and a cured adhesive composition according to claim 13 between the first and second surfaces.

15. A method for bonding at least two substrates together, comprising the steps of:
• mixing first and second parts of a curable adhesive composition according to any of the claims 1 to 12 in an appropriate ratio,
• covering one or both substrates at least partly with the mixed adhesive composition,
• bringing the substrates into contact in the section covered with the mixed adhesive composition and
• allowing the mixed adhesive composition to cure.

16. The method according to claim 15, **characterized in that** one or both of the substrates are covered with an oil layer, which is not removed before applying the mixed adhesive composition.

17. A method of making an epoxy-amine and/or epoxy-thiol adduct by reacting at least one primary amine, secondary amine and/or a thiol with at least one polyol compound comprising at least one terminal epoxy group, the polyol compound preferably comprising epoxidized poly-THF.
